(19) **Europäisches Patentamt / European Patent Office / Office européen des brevets**

(11) **EP 3 269 489 B1**

(12) **EUROPEAN PATENT SPECIFICATION**

(45) Date of publication and mention of the grant of the patent:
**27.04.2022 Bulletin 2022/17**

(21) Application number: **16761250.6**

(22) Date of filing: **18.02.2016**

(51) International Patent Classification (IPC):
**B23K 13/00** (2006.01)    **B21C 37/08** (2006.01)
**B23K 13/02** (2006.01)    **B23K 13/06** (2006.01)
**B23K 11/06** (2006.01)    **B23K 11/087** (2006.01)
**B23K 11/36** (2006.01)    **B23K 13/04** (2006.01)
**B23K 101/06** (2006.01)    **B23K 101/10** (2006.01)
**B23K 103/04** (2006.01)

(52) Cooperative Patent Classification (CPC):
**B21C 37/08; B23K 11/062; B23K 11/0873; B23K 11/36; B23K 13/00; B23K 13/02; B23K 13/025; B23K 13/046; B23K 13/06;** B23K 2101/06; B23K 2101/10; B23K 2103/04

(86) International application number:
**PCT/JP2016/000850**

(87) International publication number:
**WO 2016/143271 (15.09.2016 Gazette 2016/37)**

(54) **ELECTRIC RESISTANCE WELDED STAINLESS CLAD STEEL PIPE AND METHOD OF MANUFACTURING SAME**

WIDERSTANDSGESCHWEISSTES PLATTIERTES EDELSTAHLROHR UND VERFAHREN ZUR HERSTELLUNG DAVON

TUYAU EN ACIER REVÊTU INOXYDABLE SOUDÉ PAR RÉSISTANCE ÉLECTRIQUE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2015 JP 2015048966**

(43) Date of publication of application:
**17.01.2018 Bulletin 2018/03**

(73) Proprietor: **JFE Steel Corporation**
**Tokyo 100-0011 (JP)**

(72) Inventors:
• **OKABE, Takatoshi**
  **Tokyo 100-0011 (JP)**
• **GOTO, Sota**
  **Tokyo 100-0011 (JP)**
• **HASHIMOTO, Yuji**
  **Tokyo 100-0011 (JP)**
• **KATO, Yasushi**
  **Tokyo 100-0011 (JP)**
• **MATSUMOTO, Atsushi**
  **Tokyo 100-0011 (JP)**
• **IDE, Shinsuke**
  **Tokyo 100-0011 (JP)**
• **OTA, Hiroki**
  **Tokyo 100-0011 (JP)**

(74) Representative: **Grünecker Patent- und Rechtsanwälte PartG mbB Leopoldstraße 4 80802 München (DE)**

(56) References cited:
| | |
|---|---|
| WO-A1-2014/156057 | JP-A- H01 100 245 |
| JP-A- H01 258 865 | JP-A- H01 258 865 |
| JP-A- H04 162 969 | JP-A- S61 172 684 |
| JP-A- S62 156 087 | JP-A- 2014 062 309 |
| JP-A- 2014 062 309 | JP-A- 2014 231 084 |
| JP-A- 2014 231 084 | |

**Description**

Technical Field

The present invention relates to a method of manufacturing an electric-resistance-welded stainless clad steel pipe which, as-welded, has excellent weld characteristics.

Background Art

In general, an electric-resistance-welded steel pipe is manufactured by a method in which a steel sheet (also referred to as a "steel strip") is formed into a cylindrical shape, and the opposing edges in the width direction of the steel strip are heated and melted by a high-frequency current and butt-welded together by applying pressure with squeeze rolls. Electric-resistance-welded steel pipes are generally thought to have poorer characteristics in the weld than in the base metal. In using the welded steel pipes, there has been controversy over how to ensure characteristics, such as high toughness, strength, and elongation, of the weld for each application.

The characteristics of the electric resistance weld are often deteriorated by penetrators, which are weld defects including mainly oxides, that are formed and remain in the portions to be welded (i.e., butting edges of an open pipe, in which the two end surfaces in the circumferential direction of the open pipe formed by rounding a steel strip face each other) during electric resistance welding. These remaining penetrators result in low toughness and insufficient strength.

Accordingly, in existing techniques, in order to remove penetrators, which are the major cause of electric resistance welding defects, from the weld, by setting the amount of upset due to squeeze rolls to be larger than the thickness (t), oxide melts occurring during welding are discharged to the outside of the pipe.

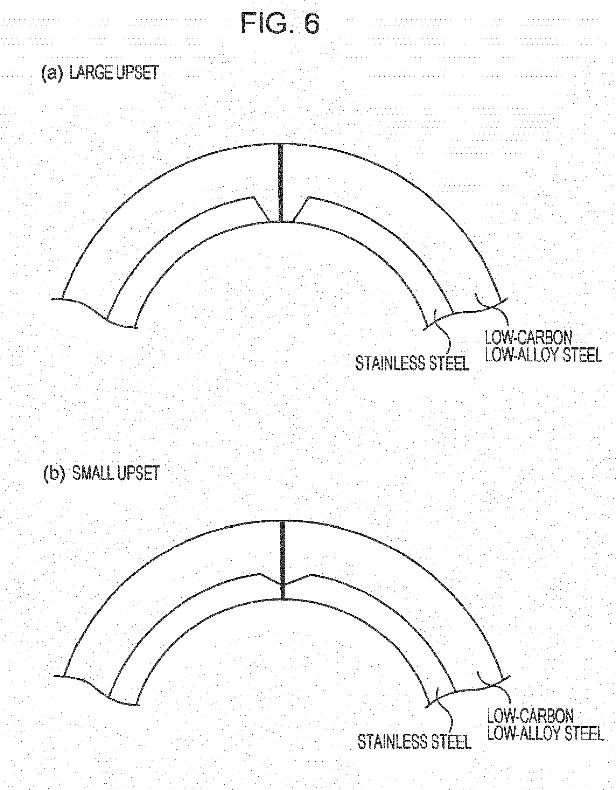

However, in the case where an electric-resistance-welded clad steel pipe is manufactured by using a clad steel sheet as a material, when the amount of upset due to squeeze rolls is set to be larger than the thickness (t), as shown in Fig. 6(a), a phenomenon occurs in which molten steel and the heat-affected zone of plain steel, which is a base metal, penetrate into the metal seam portion of the cladding material disposed inside or outside or on each side of the base metal, resulting in a loss of performance of the clad steel which makes good use of excellent characteristics of the cladding material. For example, in the case where a stainless clad steel sheet, in which the cladding material on the pipe inner-surface side is stainless steel and the base metal on the pipe outer-surface side is low-alloy steel, is used as a material, and an electric-resistance-welded stainless clad steel pipe is obtained by electric resistance welding with setting the amount of upset to be larger than the thickness (t) as described above, when the electric-resistance-welded stainless clad steel pipe is used in an environment where corrosion resistance is required on the inner surface of the pipe, the performance requirement cannot be satisfied because the corrosion resistance of the seam portion of stainless steel is markedly deteriorated owing to penetration of low-alloy steel, which is a problem. The term "clad steel" refers to clad steel including low-carbon low-alloy steel serving as a base metal and stainless steel serving as a cladding material.

In order to overcome such a problem, Patent Literature 1 discloses a method of producing a clad pipe in which two opposing edges of a rounded clad steel sheet or steel strip are subjected to butt welding, at least beads on the cladding material side among weld beads are cut away down to the depth reaching the base metal, and the cut-away portion is subjected to build-up welding with a material having the same properties as the cladding material.

Furthermore, Patent Literature 2 discloses a method of producing a clad steel pipe in which a clad steel strip is formed into an open pipe; the seam edge portion is subjected to electric resistance welding; and then, by melting and solidifying dissimilar metal up to the depth of a clad interface along the welding seam into which the dissimilar metal has penetrated, the dissimilar metal is diluted, or by subjecting the seam portion, into which dissimilar metal has penetrated, to build-up welding with the same metal as the cladding material and by rolling the built-up weld, the dissimilar metal is diluted.

Furthermore, Patent Literature 3 discloses a method of producing a welded clad steel pipe including a cladding material on the inner-surface side, in which an original sheet or original coil of clad steel is formed into a cylindrical body including a cladding material on the inner-surface side, at least part of butting portions of the cladding material of the cylindrical body is subjected to electric resistance welding, and then unwelded butting portions are subjected to build-up welding. Further method of producing welded clad steel pipes is disclosed by JP H01 258865 A, which is considered to be the closest prior art. Further methods of producing welded steel pipes with specific shielding means are disclosed by JP 2014 231084 A, JP 2014 062309 A and JP H04 162969 A.

Citation List

Patent Literature

PTL 1: Japanese Unexamined Patent Application Publication No. 60-221173
PTL 2: Japanese Unexamined Patent Application Publication No. 62-156087
PTL 3: Japanese Unexamined Patent Application Publication No. 5-154545

Summary of Invention

Technical Problem

However, the techniques described in Patent Literature 1 to 3 each require, after electric resistance welding, an additional welding process, such as cutting away cladding material beads and performing build-up welding (Patent Literature 1), melting and solidifying with a TIG arc heat source or build-up welding along the weld seam portion (Patent Literature 2), or build-up welding the unwelded butting portions (Patent Literature 3). Therefore, productivity is decreased, the production cost is increased, and the additional build-up welding badly affects the environment, all of which are problems.

It is an object of the present invention to provide a method of manufacturing an electric-resistance-welded stainless clad steel pipe which has excellent weld characteristics, even without performing an additional welding process that is required in existing techniques after electric resistance welding.

The excellent weld characteristics include mainly excellent fracture characteristics, good weld shape, and excellent corrosion resistance.

Solution to Problem

The present inventors have performed thorough studies in order to solve the problems described above. As a result, it has been found that, in the case where a shielding gas is blown over portions to be welded of an open pipe from directly above the portions to be welded in the region extending from the heating starting point to the welding point at the edges of the open pipe without covering the above region with a shield box, the oxygen concentration around the portions to be welded can be markedly decreased by properly controlling the nozzle height i.e., the height from the upper ends of the portions to be welded to a shielding-gas outlet of a shielding-gas blowing nozzle, as well as the flow rate of the shielding gas to be blown; and also by configuring the shielding-gas blowing nozzle to be divided into three or more layers in the circumferential direction of the open pipe and by properly controlling the ratio between the flow rate of the blown gas at the gas outlet of two side layers and the flow rate of the blown gas at the gas outlet of the remaining layers.

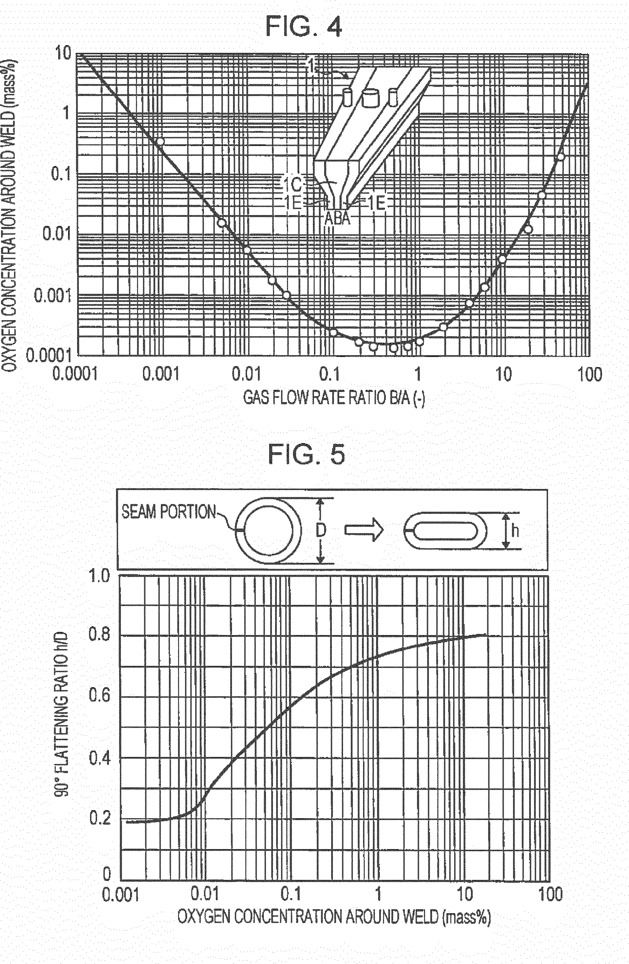

Accordingly, a test was conducted as described below. A stainless clad steel sheet including a cladding material made of stainless steel (SUS316) with a thickness of 2 mm on the pipe inner-surface side and a base metal made of low-carbon low-alloy steel with a thickness of 5 mm on the pipe outer-surface side was used as a material. Electric-resistance-welded stainless clad steel pipes were produced by varying the oxygen concentration around the portions to be welded, as shown in Fig. 6(b), with the amount of upset being set to be smaller than the thickness such that the low-alloy steel on the pipe outer-surface side did not penetrate the seam portion of the stainless steel on the pipe inner-surface side. Subsequently, a flattening test was conducted on the seam portion. As a result, as shown in Fig. 5, in the electric-resistance-welded stainless clad steel pipes produced in an atmosphere in which the oxygen concentration around the portions to be welded was 0.01% by mass or less, the flattening ratio h/D (h: flattened height at fracture, D: outer diameter of pipe) was less than 0.3 in the 90° flattening test, revealing that the weld had excellent fracture characteristics. Thus, the present invention was accomplished.

The present invention provides a method of manufacturing an electric-resistance-welded stainless clad steel as specified in the appended claims.

Advantageous Effects of Invention

According to the present invention, it is possible to manufacture an electric-resistance-welded stainless clad steel pipe which has excellent weld characteristics, even without performing an additional welding process that is required in existing techniques after electric resistance welding.

Brief Description of Drawings

[Fig. 1] Fig. 1 includes schematic views showing an embodiment of the present invention.
[Fig. 2] Fig. 2 includes schematic views showing examples of a nozzle structure which is divided into a plurality of layers.

[Fig. 3] Fig. 3 includes views illustrating the gas flow rate B of a shielding gas and the proper range of the gas flow rate ratio B/A.

[Fig. 4] Fig. 4 is a graph showing the relationship between the gas flow rate ratio B/A of a shielding gas and the oxygen concentration around portions to be welded (butting edges of an open pipe).

[Fig. 5] Fig. 5 is a graph showing the relationship between the flattening ratio h/D in the 90° flattening test of electric-resistance-welded stainless clad steel pipes and the oxygen concentration around portions to be welded (butting edges of an open pipe).

[Fig. 6] Fig. 6 includes schematic views showing cross sections of welds of electric-resistance-welded stainless clad steel pipes, in which the cladding material on the pipe inner-surface side is stainless steel and the base metal on the pipe outer-surface side is low-alloy steel, produced by electric resistance welding with different amounts of upset.

Description of Embodiments

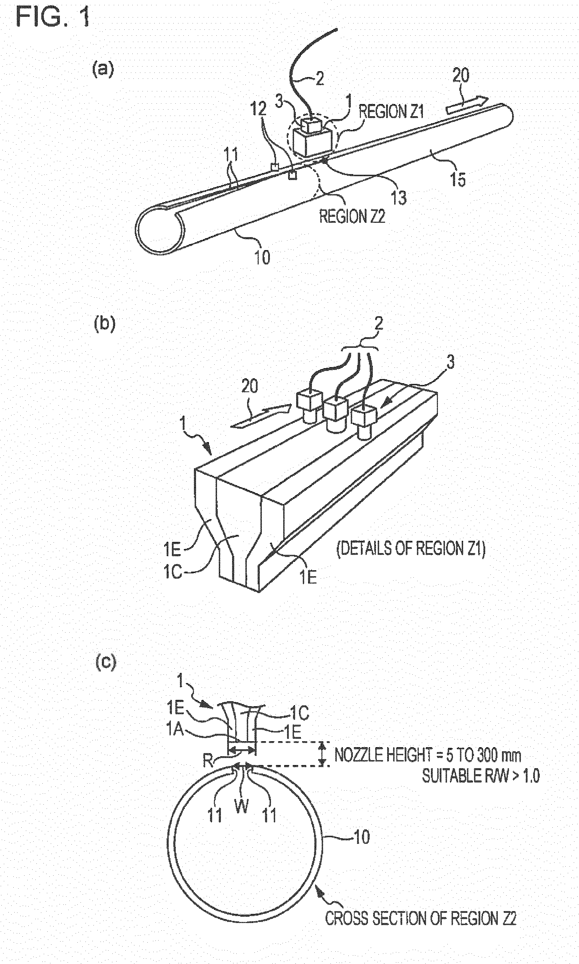

Fig. 1 includes schematic views showing an embodiment of the present invention. A steel strip is continuously fed from an uncoiler (not shown) and is corrected with a leveler (not shown). While the steel strip is being conveyed in the pipe-length direction 20, the strip is rounded in the width direction into an open pipe 10 by a roll former (not shown). Portions to be welded (11), i.e., butting edges of the open pipe, in which the two end surfaces of the strip rounded in the width direction face each other, are electric-resistance-welded together by an electric resistance welding machine, which includes a power supply device for heating edges (not shown) and squeeze rolls for pressure welding (not shown), to obtain an electric-resistance-welded steel pipe 15. Reference sign 12 denotes a heating starting point at the edge of the open pipe, and reference sign 13 denotes a welding point corresponding to a position in the pipe-length direction at which the portions to be welded (11) are welded together by the pressure welding. In some cases, an impeder (not shown) may be disposed on the pipe inner-surface side of the open pipe 10 or the electric-resistance-welded steel pipe 15. After the electric-resistance-welded steel pipe 15 has left the electric resistance welding machine, the outer diameter thereof is adjusted by a sizer (not shown). In Fig. 1, reference sign 2 denotes a gas tube, and reference sign 3 denotes a gas controller.

In the present invention, a shielding range is defined in the entire region extending in the pipe-length direction from the heating starting points 12 at the edges of the open pipe to the welding point 13, or in a zone within the region where oxides are likely to be formed on the portions to be welded (this zone can be specified by preliminary study). In the shielding range, a shielding-gas blowing nozzle (abbreviated as "nozzle") 1 is disposed at a position directly above the portions to be welded (11).

The nozzle 1 is disposed such that a gas outlet 1A directly faces the upper ends of the portions to be welded (11) .

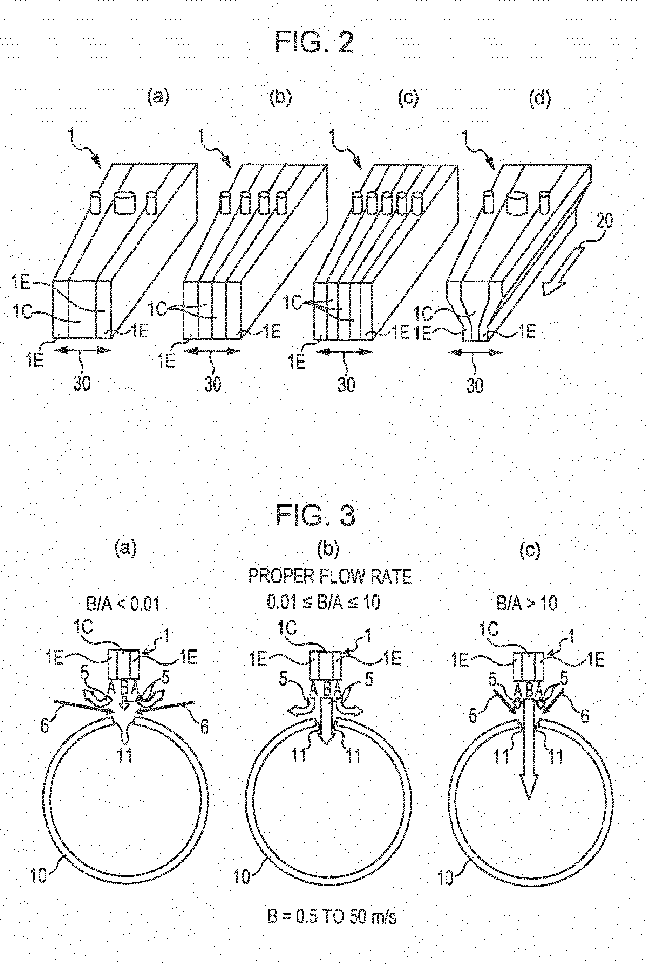

In the present invention, the nozzle 1 is divided into three layers in the open pipe circumferential direction, as shown in Fig. 1(b) and Figs. 2(a) and 2(d). These layers constitute gas flow channels which are independent from each other. Furthermore, a center layer 1C among the three layers may be divided into two or more layers in the open pipe circumferential direction 30, as shown in Figs. 2(b) and 2(c). Side layers 1E are each a single layer.

In the present invention, a shield box that covers the circumference of the open pipe 10 in the shielding range, to which reference is made in the background art, may not be provided. It is preferable not to include a shield box from the viewpoint of the pipe-making efficiency and production cost for electric-resistance-welded steel pipes, and therefore, the shield box is not provided in this embodiment.

The present inventors have observed in detail the flow of the shielding gas. The present inventors have also examined in detail the influence of various shielding gas blowing conditions, such as the position and size of the gas outlet 1A and the flow rate of the shielding gas at the gas outlet 1A of each of the center layer 1C and the side layers 1E, on the oxygen concentration around the portions to be welded (11) during electric resistance welding and the oxide area fraction in the weld formed by electric resistance welding between the portions to be welded.

As a result, it has been found that, when the shielding gas blowing conditions are optimized, the oxygen concentration around the portions to be welded is 0.01% by mass or less, and the oxide area fraction in the weld is less than 0.1%. The oxide area fraction in the weld is determined as follows: A fracture surface formed by subjecting an electric resistance weld to a Charpy impact test is observed in at least ten fields of view with an electron microscope at a magnification of 500 times or more. Oxide-containing dimple fracture surface areas observed in the fracture surface are selected, and the total area thereof is measured. The ratio of the total area of the oxide-containing dimple fracture surface areas to the total area of the fields of view is defined as the oxide area fraction.

The optimum conditions which have been found are as follows: The nozzle height, i.e., the height from the upper ends of the portions to be welded (11) to the gas outlet 1A, is 5 to 300 mm (refer to Fig. 1(c)). The flow rate B of the shielding gas 5 at the gas outlet 1A of the center layer 1C is 0.5 to 50 m/s, and the flow rate A of the shielding gas 5 at the gas outlet 1A of the side layers 1E satisfies the formula $0.01 \leq B/A \leq 10$ (refer to Fig. 3).

When the nozzle height exceeds 300 mm, the shielding gas does not sufficiently reach the portions to be welded (11), and the oxygen concentration around the portions to be welded (11) does not become 100 ppm or less. A smaller nozzle height is desirable. However, when the nozzle height is less than 5 mm, the gas outlet 1A is likely to be damaged by radiation heat from the heated portions to be welded (11), and spatters produced in the portions to be welded (11) strike the nozzle 1, thus deteriorating the durability of the nozzle 1.

In order to control the flow rate within the range of the above-mentioned optimum conditions, in the present invention, a gas controller 3 (refer to Figs. 1(a) and 1(b)) is used, in which regarding the flow rate of the shielding gas blown through the gas outlet, the gas flow rate B at the gas outlet of the center layer 1C among the three layers is controlled to be 0.5 to 50 m/s, and the gas flow rate A at the gas outlet of the remaining two side layers 1E is controlled so as to satisfy the formula $0.01 \leq B/A \leq 10$.

When the flow rate B is excessively low, the shielding gas spreads out and the portions to be welded (11) are insufficiently shielded with the gas. When the flow rate B is excessively high, the force of the shielding gas increases excessively, resulting in occurrence of air entrainment between the end surfaces of the portions to be welded (11). Therefore, the proper range of the flow rate B is 0.5 to 50 m/s. In the case where the center layer C is further divided into a plurality of layers (e.g., Figs. 2(b) and 2(c)), the plurality of layers do not necessarily have the same flow rate B, and the flow rate may vary depending on the layer as long as it is within the proper range described above.

However, even when the flow rate B is maintained within the proper range, if the gas flow rate ratio B/A, i.e., the ratio of the flow rate B to the flow rate A, is inappropriate, it is difficult to prevent air entrainment 6 as shown in Fig. 3.

That is, in the case where B/A < 0.01, the gas flow (flow of the shielding gas 5) from the side layers 1E is excessively strong, and the gas flow from the center layer 1C is excessively weak. Consequently, the gas flow from the side layers 1E is reflected by the outer surface of the open pipe 10 and deflected upward, and the gas flow rate in the reflection region becomes close to zero. Therefore, it is not possible to prevent air entrainment 6 along the outer surface of the open pipe 10 (refer to Fig. 3(a)), and the oxygen concentration around the portions to be welded (11) cannot be decreased sufficiently.

On the other hand, in the case where B/A > 10, the gas flow from the center layer 1C is excessively strong, and the gas flow from the side layers 1E is excessively weak. Consequently, the air is drawn between the end surfaces of the portions to be welded (11) by the gas flow from the center layer 1C, which is likely to cause air entrainment 6 (refer to Fig. 3(c)). Therefore, the oxygen concentration around the portions to be welded (11) cannot be decreased sufficiently.

In contrast, by setting the ratio B/A to be 0.01 to 10, the shielding gas 5, neither excessively nor insufficiently, fills the space between the end surfaces of the portions to be welded (11) without causing air entrainment, and thus sufficient gas shielding can be achieved (refer to Fig. 3(b)). Regarding the flow rate B in the gas flow rate ratio B/A, in the case where the center layer 1C is divided into a plurality of layers, and at least one layer of the plurality of layers has a gas flow rate different from that of the other layers, the maximum flow rate among different gas flow rates is used.

Fig. 4 is a graph showing, as an example, the results obtained by measuring the oxygen concentration at the middle position between the end surfaces of the portions to be welded (11) in the case where the shielding gas 5 is blown over the portions to be welded (11) by setting the nozzle height to be 50 mm and varying the gas flow rate ratio B/A in the proper range of the flow rate B of 0.5 to 50 m/s.

As is evident from Fig. 4, by setting the gas flow rate ratio B/A to be 0.01 to 10 in the proper range of the flow rate B of 0.5 to 50 m/s, it is possible to achieve an oxygen concentration of 0.01% by mass or less with a large margin (i.e., reliably).

Furthermore, as is evident from Fig. 4, by setting the gas flow rate ratio B/A to be 0.03 to 5, it is possible to achieve a lower oxygen concentration level, i.e., 0.001% to 0.0001% by mass, which is preferable. It has been confirmed that this result can be obtained even when other conditions, such as the nozzle height, are changed. That is, in the present invention, it is preferable to set the ratio B/A to be 0.03 to 5 from the viewpoint of achieving an oxygen concentration level of 0.001% to 0.0001% by mass.

By configuring the gas outlet 1A in which all the layers are combined to be rectangular in shape and to have a length of 30 mm or more in a pipe-length direction 20 and a width of 5 mm or more in a direction in which open pipe edges face each other, the gas can be more uniformly blown over the portions to be welded (11), which is preferable.

Furthermore, as shown in Fig. 1(c), when the relationship R/W > 1.0 is satisfied, where R is the total width of all the layers combined at the gas outlet 1A in the direction in which open pipe edges face each other, and W is the maximum distance between end surfaces of the portions to be welded (11) directly below the gas outlet 1A, the oxygen concentration around the portions to be welded (11) can be more rapidly decreased, which is preferable.

As the shielding gas, an inert gas is used. As used herein, the term "inert gas" refers to a gas, such as nitrogen gas, helium gas, argon gas, neon gas, or xenon gas, or a mixture of two or more of these gases.

Furthermore, as the shielding gas, the inert gas may be replaced by a gas containing 0.1% by mass or more of a reducing gas. The gas containing 0.1% by mass or more of a reducing gas is preferred because it is more effective in suppressing the formation of oxides, which are the cause of penetrators, and it can more greatly improve the toughness or strength of the weld. As used herein, the term "reducing gas" refers to a gas, such as hydrogen gas, carbon monoxide gas, methane gas, or propane gas, or a mixture of two or more of these gases. Preferably, the gas containing 0.1% by mass or more of a reducing gas is a gas composed of only a reducing gas, or a gas containing 0.1% by mass or more of a reducing gas and the balance being an inert gas.

From the viewpoint of availability and low cost, the following gases are preferable as the shielding gas to be used:

(a) In the case where an inert gas is used alone: (G1) any one of nitrogen gas, helium gas, and argon gas, or a mixture of two or more of these gases.
(b) In the case where a reducing gas is used alone: (G2) one of hydrogen gas and carbon monoxide gas or a mixture of these two gases.
(c) In the case where a mixture of an inert gas and a reducing gas is used: a mixture of the gases (G1) and (G2).

In particular, in the case where a gas containing hydrogen gas and/or carbon monoxide gas is used, sufficient safety measures should be taken without omission.

The amount of upset is determined by measuring the circumference of the pipe immediately before welding, then measuring the circumference of the welded pipe after excess weld metal is removed, and calculating the difference between the two measured values.

The electric-resistance-welded steel pipe (electric-resistance-welded stainless clad steel pipe) 15 obtained as described above is made of clad steel including low-carbon low-alloy steel and stainless steel. The flattening characteristic of an electric resistance weld, as-welded, satisfies the formula
(1) below, and the electric-resistance-welded steel pipe has the electric resistance weld having excellent fracture characteristics:

$$h/D < 0.3 \qquad (1)$$

where h is the flattened height at fracture (mm) and D is the outer diameter of the pipe (mm).

The flattening characteristics can be measured by a 90° flattening test. A pipe is cut to a length of 300 mm, and then placed such that the weld is located at the position 90° relative to the vertical at the top of the pipe (0°). The flattening test is conducted, and the flattened height at the time when fracture occurs (flattened height at fracture h) is divided by the outer diameter of pipe D to obtain the flattening ratio.

Furthermore, when the thickness tw (mm) of the electric resistance weld is $0.7 \times tb$ (mm) or less, the strength of the electric resistance weld may be deteriorated in some cases. Therefore, the thickness tw is preferably more than $0.7 \times tb$. Furthermore, when the thickness tw (mm) of the electric resistance weld is $1.6 \times tb$ or more, a gap may be formed between welds during circumferential welding between pipes to deteriorate corrosion resistance in some cases. Therefore, the thickness tw is preferably less than $1.6 \times tb$. Consequently, the thickness tw preferably satisfies the formula (2) below:

$$0.7 \times tb < tw < 1.6 \times tb \qquad (2)$$

where tb is the thickness of base metal (mm) and tw is the thickness of the weld (mm).

EXAMPLE 1

Electric-resistance-welded stainless clad steel pipes with an outer diameter of 300 mm were manufactured by a method in which stainless clad steel sheets including a cladding material made of stainless steel (SUS316, SUS304, SUS310, or SUS429) with a thickness of 2 mm on the pipe inner-surface side and a base metal made of low-carbon low-alloy steel (0.05 mass% C-0.3 mass% Si-1.2 mass% Mn-Fe) with a thickness of 5 mm on the pipe outer-surface side were used as a material, and the stainless clad steel sheets were passed through a pipe-making system including an uncoiler, a leveler, a roll former, an electric resistance welding machine, and a sizer arranged in this order. In the manufacturing process, during electric resistance welding, gas shielding for portions to be welded was performed by varying level of the gas blowing conditions and the amount of upset within or outside the ranges of the present invention described in the embodiment as shown in Tables 1 and 2. The thickness tb (mm) of the base metal and the thickness tw (mm) of the electric resistance weld were measured. The oxygen concentration around portions to be welded was measured. A 90° flattening test was conducted on the weld, and a corrosion test by oxalic acid etching was conducted on the inner-surface side of the pipe. As the reducing gas, 3% by mass hydrogen gas was used. The amount of upset due to squeeze rolls was determined by measuring the circumference of the pipe before being subjected to squeeze rolls, then measuring the circumference of the pipe after welding was performed with squeeze rolls and molten beads on the outer surface were cut away, and calculating the difference between the two measured values. The thickness of the base metal was determined by measuring the thickness of the pipe at a pitch of 60° in the circumferential direction of the pipe, relative to the weld (0°), i.e., at positions of 60°, 120°, 180°, 240°, and 300°, and calculating the average value thereof. The thickness of the weld was determined by measuring the thickness of the weld seam portion.

In the corrosion test, the pipe in which intergranular corrosion was not observed was evaluated as pass, and the pipe in which intergranular corrosion was observed was evaluated as rejection.

As shown in Tables 1 and 2, it has been confirmed that, in the inventive examples, the flattening ratio h/D (h: flattened height at fracture (mm), D: outer diameter of pipe (mm)) of the weld is significantly low compared with the comparative examples, the fracture characteristics are excellent, the weld has a good shape, and the weld maintains corrosion resistance of the stainless steel.

[Table 1]

| Level | Cladding material | Nozzle height (mm) | Gas flow rate B (m/s) *1 | Gas flow rate ratio B/A *1 | R/W *2 | Reducing gas content (mass%) | Amount of upset (mm) | Oxygen concentration around portions to be welded (mass% $\times 10^2$) | Results of flattening test on weld h/D | Thickness of base metal tb (mm) | Thickness of weld tw (mm) | tw/tb | Results of corrosion test on pipe inner surface | Remarks |
|---|---|---|---|---|---|---|---|---|---|---|---|---|---|---|
| 1 | SUS316 | 100 | 0.5 | 0.5 | 5.0 | None | 4 | 0.03 | 0.2 | 7.0 | 7.5 | 1.1 | Pass | Inventive example |
| 2 | SUS316 | 100 | 1.0 | 0.5 | 5.0 | None | 4 | 0.04 | 0.1 | 7.0 | 7.5 | 1.1 | Pass | Inventive example |
| 3 | SUS316 | 100 | 5.0 | 0.5 | 5.0 | None | 4 | 0.02 | 0.1 | 7.0 | 7.5 | 1.1 | Pass | Inventive example |
| 4 | SUS316 | 100 | 10.0 | 0.1 | 5.0 | None | 4 | 0.04 | 0.1 | 7.0 | 7.5 | 1.1 | Pass | Inventive example |
| 5 | SUS316 | 100 | 50.0 | 0.03 | 5.0 | None | 4 | 0.06 | 0.1 | 7.0 | 7.5 | 1.1 | Pass | Inventive example |
| 6 | SUS316 | 200 | 0.5 | 3 | 5.0 | None | 4 | 0.08 | 0.1 | 7.0 | 7.5 | 1.1 | Pass | Inventive example |
| 7 | SUS316 | 200 | 1.0 | 2 | 5.0 | None | 4 | 0.09 | 0.1 | 7.0 | 7.5 | 1.1 | Pass | Inventive example |
| 8 | SUS316 | 200 | 5.0 | 10 | 5.0 | None | 4 | 0.3 | 0.2 | 7.0 | 7.5 | 1.1 | Pass | Inventive example |
| 9 | SUS316 | 200 | 10.0 | 0.01 | 5.0 | None | 4 | 0.2 | 0.2 | 7.0 | 7.5 | 1.1 | Pass | Inventive example |
| 10 | SUS316 | 200 | 50.0 | 0.05 | 5.0 | None | 4 | 0.1 | 0.2 | 7.0 | 7.5 | 1.1 | Pass | Inventive example |
| 11 | SUS316 | 50 | 0.5 | 0.5 | 5.0 | None | 4 | 0.1 | 0.2 | 7.0 | 7.5 | 1.1 | Pass | Inventive example Inventive example |
| 12 | SUS316 | 50 | 1.0 | 3 | 5.0 | None | 4 | 0.07 | 0.2 | 7.0 | 7.5 | 1.1 | Pass | Inventive example |

| Level | Cladding material | Nozzle height (mm) | Gas flow rate B (m/s) *1 | Gas flow rate ratio B/A *1 | R/W *2 | Reducing gas content (mass%) | Amount of upset (mm) | Oxygen concentration around portions to be welded (mass% $\times 10^2$) | Results of flattening test on weld h/D | Thickness of base metal tb (mm) | Thickness of weld tw (mm) | tw/tb | Results of corrosion test on pipe inner surface | Remarks |
|---|---|---|---|---|---|---|---|---|---|---|---|---|---|---|
| 13 | SUS316 | 50 | 5.0 | 0.2 | 5.0 | None | 4 | 0.04 | 0.1 | 7.0 | 7.5 | 1.1 | Pass | Inventive example |
| 14 | SUS316 | 50 | 10.0 | 0.3 | 5.0 | None | 4 | 0.05 | 0.1 | 7.0 | 7.5 | 1.1 | Pass | Inventive example |
| 15 | SUS316 | 50 | 50.0 | 0.5 | 5.0 | None | 4 | 0.1 | 0.2 | 7.0 | 7.5 | 1.1 | Pass | Inventive example |
| 16 | SuS316 SUS316 | 50 | 10.0 | 0.5 | 10.0 | None | 2 | <0.01 | 0.1 | 7.0 | 6.4 | 0.9 | Pass | Inventive example |
| 17 | SUS316 | 50 | 10.0 | 2 | 2.0 | None | 2 | 0.03 | 0.1 | 7.0 | 6.2 | 0.9 | Pass | Inventive example |
| 18 | SUS316 | 50 | 10.0 | 2 | 1.0 | None | 2 | 0.05 | 0.1 | 7.0 | 6.0 | 0.9 | Pass | Inventive example |
| 19 | SUS316 | 50 | 10.0 | 0.5 | 20.0 | None | 7 | <0.01 | 0.1 | 6.5 | 7.5 | 1.2 | Pass | Inventive example |
| 20 | SUS316 | 50 | 10.0 | 0.5 | 5.0 | None | 7 | <0.01 | 0.1 | 6.5 | 9.7 | 1.5 | Pass | Inventive example |
| 21 | SUS316 | 300 | 10.0 | 0.2 | 5.0 | None | 1 | 0.2 | 0.2 | 7.0 | 5.5 | 0.8 | Pass | Inventive example |
| 22 | SUS316 | 50 | 10.0 | 0.03 | 5.0 | 0.1 | 1 | <0.01 | 0.1 | 7.0 | 5.5 | 0.8 | Pass | Inventive example |
| 23 | SUS316 | 50 | 10.0 | 0.5 | 5.0 | 3.0 | 3 | <0.01 | 0.1 | 7.0 | 7.1 | 1.0 | Pass | Inventive example |
| 24 | SUS316 | 50 | 10.0 | 1 | 5.0 | 5.0 | 3 | <0.01 | 0.1 | 7.0 | 7.1 | 1.0 | Pass | Inventive example |
| 25 | SUS316 | 50 | 5.0 | 3 | 1.0 | 5.0 | 3 | <0.01 | 0.1 | 7.0 | 7.1 | 1.0 | Pass | Inventive example |

| Level | Cladding material | Nozzle height (mm) | Gas flow rate B (m/s) *1 | Gas flow rate ratio B/A *1 | R/W *2 | Reducing gas content (mass%) | Amount of upset (mm) | Oxygen concentration around portions to be welded (mass% $\times$ 10$^2$) | Results of flattening test on weld h/D | Thickness of base metal tb (mm) | Thickness of weld tw (mm) | tw/tb | Results of corrosion test on pipe inner surface | Remarks |
|---|---|---|---|---|---|---|---|---|---|---|---|---|---|---|
| 26 | SUS316 | 50 | 5.0 | 5 | 0.8 | 5.0 | 3 | <0.01 | 0.1 | 7.0 | 7.1 | 1.0 | Pass | Inventive example |
| 27 | SUS304 | 50 | 5.0 | 5 | 0.8 | 5.0 | 3 | <0.01 | 0.1 | 7.0 | 7.1 | 1.0 | Pass | Inventive example |
| 28 | SUS304 | 50 | 5.0 | 5 | 0.8 | 5.0 | 3 | <0.01 | 0.1 | 7.0 | 7.1 | 1.0 | Pass | Inventive example |
| 29 | SUS310 | 50 | 5.0 | 5 | 0.8 | 5.0 | 3 | <0.01 | 0.1 | 7.0 | 7.1 | 1.0 | Pass | Inventive example |
| 30 | SUS429 | 50 | 5.0 | 5 | 0.8 | 5.0 | 3 | <0.01 | 0.1 | 7.0 | 7.1 | 1.0 | Pass | Inventive example |
| 31 | SUS429 | 50 | 5.0 | 5 | 0.8 | 5.0 | 3 | <0.01 | 0.1 | 7.0 | 7.1 | 1.0 | Pass | Inventive example |

*1: Gas flow rate B; Gas flow rate B at tne gas outlet of the center layer three layers. Gas flow rate A; Gas flow rate A at the gas outlet of the remaining two side layers among three layers.

*2: R; Total width of all the layers combined at the gas outlet in the direction in which open pipe edges face each other. W; Maximum distance between end surfaces of portions to be welded directly below the gas outlet.

EP 3 269 489 B1

[Table 2]

Table 2

| Level | Cladding material | Nozzle height (mm) | Gas flow rate B (m/s) *1 | Gas flow rate ratio B/A *1 | R/W *2 | Reducing gas content (mass%) | Amount of upset (mm) | Oxygen concentration around portions to be welded (mass% × 10²) | Results of flattening test on weld h/D | Thickness of base metal tb (mm) | Thickness of weld tw (mm) | tw/tb | Results of corrosion test on pipe inner surface | Remarks |
|---|---|---|---|---|---|---|---|---|---|---|---|---|---|---|
| 32 | SUS316 | 400 | 1.0 | 1 | 5.0 | None | 4 | 15 | 0.5 | 7.0 | 7.5 | 1.1 | Pass | Comparative example |
| 33 | SUS316 | 100 | 0.4 | 1 | 5.0 | None | 4 | 160 | 0.8 | 7.0 | 7.5 | 1.1 | Pass | Comparative example |
| 34 | SUS316 | 100 | 60.0 | 1 | 5.0 | None | 4 | 3 | 0.4 | 7.0 | 7.5 | 1.1 | Pass | Comparative example |
| 35 | SUS316 | 400 | 60.0 | 1 | 5.0 | None | 4 | 40 | 0.6 | 7.0 | 7.5 | 1.1 | Pass | Comparative example |
| 36 | SUS316 | 100 | 60.0 | 1 | 5.0 | 5.0 | 4 | 2 | 0.4 | 7.0 | 4.5 | 0.6 | Pass | Comparative example |
| 37 | SUS316 | 400 | 1.0 | 1 | 5.0 | None | 10 | 12 | 0.4 | 7.0 | 7.5 | 1.1 | Rejection | Comparative example |
| 38 | SUS304 | 400 | 60 | 1 | 5.0 | None | 4 | 40 | 0.6 | 7.0 | 7.5 | 1.1 | Pass | Comparative example |
| 39 | SUS304 | 400 | 60 | 1 | 5.0 | None | 4 | 40 | 0.6 | 7.0 | 7.5 | 1.1 | Pass | Comparative example |
| 40 | SUS310 | 400 | 60 | 1 | 5.0 | None | 4 | 40 | 0.6 | 7.0 | 7.5 | 1.1 | Pass | Comparative example |
| 41 | SUS429 | 400 | 60 | 1 | 5.0 | None | 4 | 40 | 0.6 | 7.0 | 7.5 | 1.1 | Pass | Comparative example |
| 42 | SUS429 | 400 | 60 | 1 | 5.0 | None | 4 | 40 | 0.6 | 7.0 | 7.5 | 1.1 | Pass | Comparative example |

*1: Gas flow rate B; Gas flow rate B at the gas outlet of the center layer among three layers. Gas flow rate A; Gas flow rate A at the gas outlet of the remaining two side layers among three layers.
*2: R; Total width of all the layers combined at the gas outlet in the direction in which open pipe edges face each other. W; Maximum distance between end surfaces of portions to be welded directly below the gas outlet.

EP 3 269 489 B1

Reference Signs List

| | |
|---|---|
| 1 | nozzle (shielding-gas blowing nozzle) |
| 1A | gas outlet |
| 1C | center layer |
| 1E | side layer |
| 2 | gas tube |
| 3 | gas controller |
| 5 | shielding gas |
| 6 | air entrainment |
| 10 | open pipe |
| 11 | portion to be welded (butting edge of open pipe) |
| 12 | heating starting point at edge of open pipe |
| 13 | welding point |
| 15 | electric-resistance-welded steel pipe |
| 20 | pipe-length direction |
| 30 | open pipe circumferential direction |

**Claims**

1. A method of manufacturing an electric-resistance-welded stainless clad steel pipe, made of clad steel comprising low-carbon low-alloy steel and stainless steel, wherein the flattening characteristic of an electric resistance weld, as-welded, satisfies the formula (1) below:

$$h/D < 0.3 \qquad (1)$$

where h is the flattened height at fracture (mm) and D is the outer diameter of the pipe (mm), in which a shielding process for portions of an open pipe (10) to be welded for an electric-resistance-welded steel pipe (15) is used to shield portions to be welded (11) with a shielding gas (5) composed of an inert gas during the electric resistance welding, the method comprising blowing the shielding gas (5) to the portions to be welded (11) through a gas outlet (1A) of a shielding-gas blowing nozzle (1) which is divided into three layers in the open pipe circumferential direction (30), the gas outlet (1A) being disposed at a position 5 to 300 mm above the upper ends of the portions to be welded (11), wherein the gas flow rate B at the gas outlet (1A) of a center layer (1C) among the three layers is set to be 0.5 to 50 m/s, and the gas flow rate A (m/s) at the gas outlet (1A) of the remaining two side layers (1E) is set so as to satisfy the formula (3) below:

$$0.01 \leq B/A \leq 10 \qquad (3).$$

2. The method of manufacturing the electric-resistance-welded stainless clad steel pipe according to Claim 1, wherein the gas outlet (1A) is rectangular and has a length of 30 mm or more in a pipe-length direction (20) and a width of 5 mm or more in a direction in which open pipe edges face each other.

3. The method of manufacturing the electric-resistance-welded stainless clad steel pipe according to Claim 1 or 2, wherein the relationship R/W > 1.0 is satisfied, where R is the total width of all the layers (1C, 1E) combined at the gas outlet (1A) in the direction in which open pipe edges face each other, and W is the maximum distance between end surfaces of the portions to be welded (11) directly below the gas outlet (1A).

4. The method of manufacturing the electric-resistance-welded stainless clad steel pipe according to any one of Claims 1 to 3, wherein the inert gas is replaced by a gas containing 0.1% by mass or more of a reducing gas.

**Patentansprüche**

1. Verfahren zum Herstellen eines widerstandsgeschweißten Rohrs aus rostfreiem plattiertem Stahl, das aus plattiertem Stahl besteht, der kohlenstoffarmen, niedrig legierten Stahl sowie rostfreien Stahl umfasst, wobei für die Abflachungscharakteristik einer Widerstandsschweißnaht im geschweißten Zustand die nachstehende Formel (1) gilt:

$$h/D < 0{,}3 \qquad (1)$$

wobei h die abgeflachte Höhe bei Bruch (mm) ist und D der Außendurchmesser des Rohrs (mm) ist, bei dem ein Abschirmvorgang für zu verschweißende Abschnitte eines offenen Rohres (10) für ein widerstandsgeschweißtes Stahlrohr (15) eingesetzt wird, um zu verschweißende Abschnitte (11) mit einem aus einem Inertgas bestehenden Schutzgas (5) während des Widerstandsschweißens abzuschirmen, wobei das Verfahren Blasen des Schutzgases (5) auf die zu verschweißenden Abschnitte (11) über einen Gasauslass (1A) einer Schutzgas-Blasdüse (1) umfasst, die in der Umfangsrichtung (30) des offenen Rohrs in drei Schichten unterteilt ist, wobei der Gasauslass (1A) an einer Position 5 bis 300 mm oberhalb der oberen Enden der zu verschweißenden Abschnitte (11) angeordnet ist, die Gas-Strömungsgeschwindigkeit B an dem Gasauslass (1A) einer mittleren Schicht (1C) von den drei Schichten auf 0,5 bis 50 m/s eingestellt ist und die Gas-Strömungsgeschwindigkeit A (m/s) an dem Gasauslass (1A) der verbleibenden zwei seitlichen Schichten (1E) so eingestellt ist, dass dafür die nachstehende Formel (3) gilt:

$$0{,}01 \leq B/A \leq 10 \qquad (3).$$

2. Verfahren zum Herstellen des widerstandsgeschweißten Rohrs aus rostfreiem plattiertem Stahl nach Anspruch 1, wobei der Gasauslass (1A) rechteckig ist und eine Länge von 30 mm oder mehr in einer Rohr-Längenrichtung (20) sowie eine Breite von 5 mm oder mehr in einer Richtung hat, in der Kanten des offenen Rohrs einander zugewandt sind.

3. Verfahren zum Herstellen des widerstandsgeschweißten Rohrs aus rostfreiem plattiertem Stahl nach Anspruch 1 oder 2, wobei die Beziehung R/W > 1,0 gilt und dabei R die Gesamtbreite aller an dem Gasauslass (1A) verbundenen Schichten (1C, 1E) in der Richtung ist, in der Kanten des offenen Rohrs einander zugewandt sind, und W der maximale Abstand zwischen Endflächen der zu verschweißenden Abschnitte (11) direkt unterhalb des Gasauslasses (1A) ist.

4. Verfahren zum Herstellen eines widerstandsgeschweißten Rohrs aus rostfreiem plattiertem Stahl nach einem der Ansprüche 1 bis 3, wobei das Inertgas durch ein Gas ersetzt wird, das 0,1 Masse-% oder mehr eines reduzierenden Gases enthält.

**Revendications**

1. Procédé de fabrication d'un tuyau en acier plaqué inoxydable soudé par résistance électrique, fait en acier plaqué comprenant de l'acier inoxydable et de l'acier faible alliage faible carbone, dans lequel la caractéristique d'aplatissement d'un soudage par résistance électrique, en soudure brute, satisfait la formule (1) ci-dessous :

$$h/D < 0{,}3 \qquad (1)$$

où h est la hauteur aplatie à la fracture (mm) et D est le diamètre extérieur du tuyau (mm), dans laquelle un processus de protection pour des parties d'un tuyau ouvert (10) à souder pour un tuyau en acier soudé par résistance électrique (15) est utilisé pour protéger des parties à souder (11) au moyen d'un gaz protecteur (5) composé d'un gaz inerte au cours du soudage par résistance électrique, le procédé comprenant un soufflage du gaz protecteur (5) sur les parties à souder (11) via une sortie de gaz (1A) d'une buse de soufflage de gaz protecteur (1) qui est divisée en trois couches dans la direction circonférentielle de tuyau ouvert (30), la sortie de gaz (1A) étant disposée sur une position 5 à 300 mm au-dessus des extrémités supérieures des parties à souder (11), dans lequel le débit de gaz B au niveau de la sortie de gaz (1A) d'une couche centrale (1C) parmi les trois couches est fixé à 0,5 à 50 m/s, et le débit de gaz A (m/s) au niveau de la sortie de gaz (1A) des deux couches latérales restantes (1E) est fixé de sorte à satisfaire la formule (3) ci-dessous :

$$0,01 \leq B/A \leq 10 \qquad (3).$$

2. Le procédé de fabrication du tuyau en acier plaqué inoxydable soudé par résistance électrique selon la revendication 1, dans lequel la sortie de gaz (1A) est rectangulaire et présente une longueur de 30 mm ou plus dans une direction de longueur du tuyau (20) et une largeur de 5 mm ou plus dans une direction dans laquelle des arêtes de tuyau ouvert se font face.

3. Le procédé de fabrication du tuyau en acier revêtu inoxydable soudé par résistance électrique selon la revendication 1 ou 2, dans lequel la relation R/W > 1,0 est satisfaite, où R est la largeur totale de toutes les couches (1C, 1E) combinées au niveau de la sortie de gaz (1A) dans la direction dans laquelle des arêtes de tuyau ouvert se font face, et W est la distance maximale entre des surfaces d'extrémité des parties à souder (11) directement sous la sortie de gaz (1A).

4. Le procédé de fabrication du tuyau en acier plaqué inoxydable soudé par résistance électrique selon l'une quelconque des revendications 1 à 3, dans lequel le gaz inerte est remplacé par un gaz contenant 0,1 % en masse ou plus d'un gaz réducteur.

# FIG. 1

(a)

REGION Z1

REGION Z2

(b)

(DETAILS OF REGION Z1)

(c)

NOZZLE HEIGHT = 5 TO 300 mm
SUITABLE R/W > 1.0

CROSS SECTION OF REGION Z2

# FIG. 2

(a)         (b)         (c)         (d)

# FIG. 3

(a)         (b)         (c)

PROPER FLOW RATE

$B/A < 0.01$       $0.01 \leq B/A \leq 10$       $B/A > 10$

$B = 0.5 \text{ TO } 50 \text{ m/s}$

## FIG. 4

## FIG. 5

# FIG. 6

(a) LARGE UPSET

STAINLESS STEEL   LOW-CARBON
LOW-ALLOY STEEL

(b) SMALL UPSET

STAINLESS STEEL   LOW-CARBON
LOW-ALLOY STEEL

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01258865 A
- JP 2014231084 A
- JP 2014062309 A
- JP H04162969 A
- JP 60221173 A
- JP 62156087 A
- JP 5154545 A